# EUROPÄISCHE PATENTSCHRIFT

(11) **EP 0 374 774 B1**
(45) Veröffentlichungstag und Bekanntmachung des Hinweises auf die Patenterteilung: **15.11.1995**
(21) Anmeldenummer: 89123306.6
(22) Anmeldetag: 15.12.1989
(51) Int. Cl.: B29C 33/48, B29C 45/26, B65D 1/38

(54) **Flaschenkästen mit waagrechten Griffholmen**
Crates with horizontal gripping elements
Casiers à bouteilles avec des éléments horizontaux servant de poignées

(30) Priorität: 20.12.1988 DE 3842864; 13.01.1989 DE 3900894
(43) Veröffentlichungstag der Anmeldung: 27.06.1990
(73) Patentinhaber: Schoeller-Plast AG, 1680 Romont (CH)
(72) Erfinder: Umiker, Hans, CH-8132 Egg/Zürich (CH)
(74) Vertreter: Bockhorni, Josef, Dipl.-Ing.

(56) Entgegenhaltungen:
- DE-U- 8 816 018
- FR-A- 1 295 004
- GB-A- 1 371 240
- US-A- 3 506 154

## Beschreibung

Die Erfindung betrifft einen Flaschenkasten gemäß dem Oberbegriff des Patentanspruches 1. Ein derartiger Flaschenkasten ist allgemein bekannt.

Flaschenkästen werden heute aus Kunststoff hergestellt, wobei die Herstellung durch Spritzgießen erfolgt. Hierzu bedient man sich zweier ineinandergesetzter Formhälften bestehend aus einer oberen und unteren Formhälfte, die zwischen sich einen Formhohlraum bilden, der dem zu formenden Kasten entspricht. Derartige Flaschenkästen werden zumeist mit waagrachten Griffholmen gebildet, die sich mehr oder weniger ausgeprägt über die Schmal- und/oder Längsseiten des Flaschenkastens erstrecken. Insbesondere bei Flaschenkästen zur Aufnahme von Großflaschen, die bei vollen Flaschen ein Gewicht von 15 kg und mehr besitzen, erstrecken sich die Griffholme zwischen den durch vertikale Stützprofile gebildeten Kastenecken, wobei die vertikalen Eckstützprofile, die waagrecht am oberen Kastenrand verlaufenden Griffholme und der untere Kastenbereich große Sichtöffnungen begrenzen. Da die von Kastenecke zu Kastenecke sich erstreckenden Griffholme sehr lang sind, kommt es insbesondere bei Flaschenkästen zur Aufnahme von Großflaschen auf eine stabile Ausführung der Griffholme an, um ein Ausreißen oder Verformen der Griffholme unter der Last des Kasteninhalts zu vermeiden. Aus diesem Grund werden solche Griffholme in Art von Profilleisten ausgeführt, wobei sich nach unten hin offene U-Profile zunehmend durchgesetzt haben. Derartige aus Kopf stehende U-Profile lassen sich aber nur schwierig entformen. Ferner bilden diese U-Profile zwei ausgeprägte Randleisten, die sich unter der Last des Kasteninhalts in die den Griffholm umklammernde Griffhand einschneiden können. Insbesondere im Eckbereich, also dort, wo die U-Profile in die vertikalen Eckprofile einmünden, ergibt sich aufgrund der notwendigen Entformung ein sehr scharfkantiger Übergang aus der horizontalen Holmfläche in die vertikale Stützfläche, wobei allerdings gerade dort sehr häufig die Griffhand zur Anlage kommt, insbesondere wenn der Flaschenkasten an den beiden vertikalen Stützprofilen gegriffen wird und der untere Bereich der U-Profile von oben her aus die Griffhand drückt.

Zur Verbesserung des Griffverhaltens ist es bekannt, in die unten offenen U-Profile Stegleisten einzuschlagen, die dann mit Preßsitz in den U-Profilen sitzen und nach unten hin eine geschlossene Grifffläche sichern. Sie tragen allerdings nicht zur Griffholmstabilisierung bei. Je nach Toleranzabweichungen können diese Stegleisten nach mehr oder weniger langen Einsatzzeiten der Flaschenkästen herausfallen, so daß sich wiederum ein ungünstiges Griffverhalten ergibt, oder es müssen diese Leisten entsprechend stark in die Profile eingeschlagen werden, was zu Deformationen der Profile führen kann. Häufig sitzen diese Leisten auch nicht exakt in den Öffnungen, so daß schmale Spalte zwischen den Profilen und den Stegleisten bleiben, in denen sich Schmutz ansammeln kann und deren Begrenzungsränder bei schweren Kastangewichten in die Griffwand einschneiden können.

Aufgabe der Erfindung ist es, Flaschenkästen mit sehr stabilen waagrechten Griffholmen zu schaffen, die ein bequemes Trageverhalten ermöglichen, insbesondere ein Einschneiden des Griffholms in die Griffhand weitgehend verhindern. Hierbei sollen derartige Flaschenkästen in einfacher Weise herstellbar sein.

Diese Aufgabe wird erfindungsgemäß durch die in Anspruch 1 enthaltenen Merkmale gelöst, wobei zweckmäßige Weiterbildungen des Flaschenkastens durch die Unteransprüche gekennzeichnet sind.

Nach Maßgabe der Erfindung werden die Griffholme an den Seitenwänden durch Teilprofile gebildet, die durch Anschweißung von weiteren Profilen zu einem um die Holmlängsachse geschlossenen Hohlprofil ergänzt werden. Besonders bevorzugt ist hierbei ein Teilprofil in Art eines nach obenhin offenen U-Profil, an dessen einen freien Schenkel eine Leiste angespritzt ist, die an die freien Ränder der beiden U-Schenkel des Teilprofils durch Ultraschallschweißen oder durch Hochfrequenzschweißen angebunden wird.

Diese Ausführungsform ermöglicht einerseits eine einfache Entformung des Kastens aus seiner Form und bietet ein komfortables Trageverhalten, da die Handfläche um den die beiden U-Schenkeln verbindenden U-Steg greift, mithin ein Einscheiden verhindert ist.

Durch Schließen der U-Profile von oben her mit einer angespritzten Leiste und Verschweißen desselben ergibt sich ein geschlossenes einteiliges Hohlprofil, welches zur Stabilisierung beiträgt. Eine besonders dichte Verschweißung wird dadurch gewährleistet, daß an den Schweißflächen Schweißvorsprünge vorgesehen sind, die vorzugsweise kontinuierlich verlaufen. Im Falle der Untergliederung der U-Profile durch die U-Schenkel überbrückende Querstege sind Schweißspitzen auch an den Querstegen ausgebildet, so daß sich zusätzliche Anbindungsflächen zum Schweißen ergeben. Ggf. können in den Holmunterseiten Abflußöffnungen vorgesehen sein. In einer weiteren Ausgestaltung sind an der Holmunterseiten Lamellen vorgesehen, die gleichfalls ein komfortables Griffverhalten ermöglichen. Die Querstege können hierbei auch als Zentrierglieder für die Fixierung der anzuschweißenden Leiste herangezogen werden.

Nachfolgend werden Ausführungsbeispiele der Erfindung anhand der Zeichnung beschrieben, die in rein schematischer Darstellung zeigt:
- Fig. 1: eine Teilansicht eines Flaschenkastens in perspektivischer Darstellung,
- Fig. 2: eine Teilansicht des Flaschenkastens in Fig.1, jedoch von der anderen Seite her gesehen,
- Fig. 3a bis 3d: verschiedene Ausführungsformen von Griffholmen,
- Fig. 4: eine Schnittansicht durch einen nicht erfindungsgemäßen Griffholm,
- Fig. 5: eine Teilansicht des Griffholms in Fig. 4 in Draufsicht im Bereich einer Kastenecke,
- Fig. 6: eine Seitenansicht eines Stopfens zum Verschließen der Holmöffnung,
- Fig. 7: eine Seitenansicht des Stopfens nach Fig. 6,
- Fig. 8: eine Draufsicht auf den Stopfen nach Fig. 6,
- Fig. 9: eine weitere Ausführungsform eines Griffholms in Schnittansicht,
- Fig.10: eine Draufsicht auf einen Teil des Griffholms nach Fig. 9 im Bereich einer Kastenecke,
- Fig.11: eine weitere Ausführungsform eines Griffholms in Schnittdarstellung sowie
- Fig.12: eine schematische Teilansicht eines Griffholms, der an seiner Unterseite in Lamellen aufgegliedert ist, wobei in Fig. 12 der in einen Kreis eingeschrießene Teil in Ansicht von unten dargestellt ist.

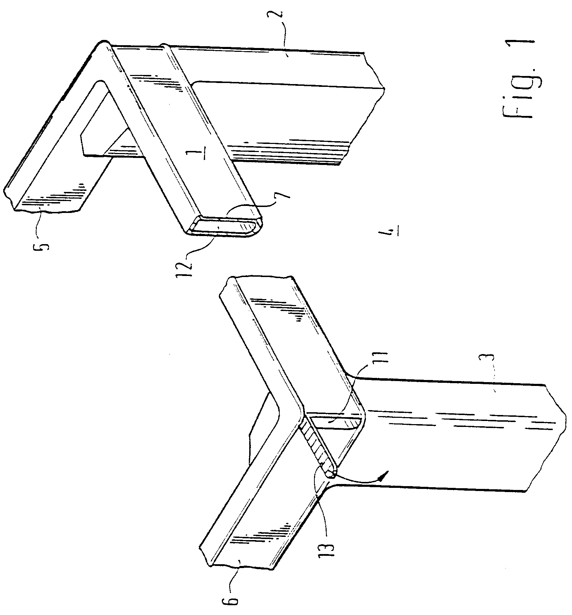

Fig. 1 zeigt einen Teil eines Flaschenkastens aus Kunststoff, der an seiner in Fig. 1 vorne ersichtlichen Schmalseite einen den oberen Kastenrand bildenden waagrecht verlaufenden Griffholm 1 aufweist, der zwei die Kastenecken bildende vertikale Stützprofile 2 und 3 des Kastens miteinander verbindet, wobei zwischen dem waagrechten Griffholm 1, den vertikalen Eckstützprofilen 2 und 3 und dem aus der Fig. 1 nicht ersichtlichen unteren Bereich der Kastenseitenwand eine Sichtöffnung 4 begrenzt ist. Der waagrechte Griffholm 1, der die beiden Eckstützprofile 2 und 3 miteinander verbindet, ist in Fig. 1 zur besseren Darstellung des Griffholmprofils geschnitten dargestellt. Bei dem in Fig. 1 dargestellten Kasten schließen sich am Griffholm 1 zwei weitere waagrecht verlaufende Griffholme 5 und 6 an, die den oberen Rand der Längsseitenwände des Flaschenkastens begrenzen und die Eckstützprofile 2 und 3 mit den beiden weiteren in Fig. 1 nicht ersichtlichen hinteren Eckstützprofilen verbinden. Die somit um den Kasten umlaufand angeordneten Griffholme 1, 5 und 6 sowie der dem Griffholm 1 gegenüberliegende Griffholm an der anderen Schmalseite des Kastens ermöglichen das Tragen des Flaschenkastens, tragen aber auch zur Versteifung des Flaschenkastenaufbaus bei.

Der Griffholm 1 ist als ein um seine Holmlängsachse geschlossenes Hohlprofil 7 ausgebildet, das einen gestreckten O-Querschnitt aufweist. Auch der dem Holm 1 gegenüberliegende in Fig. 1 nicht dargestellte Griffholm an der anderen Kastenschmalseite ist als um die Holmlängsachse geschlossenes Hohlprofil 7 ausgebildet.

Bei der Ausführungsform nach Fig. 1 erfolgt das Schließen der Mündungsöffnung 11 durch einen einstückig am Kasten angeformten Deckel 13, der in die Mündungsöffnung 11 eingedrückt werden kann. Hierzu kann der Deckel 13 an seiner Innenfläche mit einem Vorsprung entsprechend des Hohlquerschnitts des Profils 7 ausgebildet sein, so daß der Vorsprung mit Passung in den Hohlraum eingedrückt werden kann und die Außenfläche des Deckels 13 die Ränder der Mündungsöffnung 11 überdeckt. Alternativ kann jedoch auch der Deckel 13 entsprechend dem Hohlraumquerschnitt ausgebildet sein, so daß der Deckel 13 bündig in die Mündungsöffnung 11 eindrückbar ist.

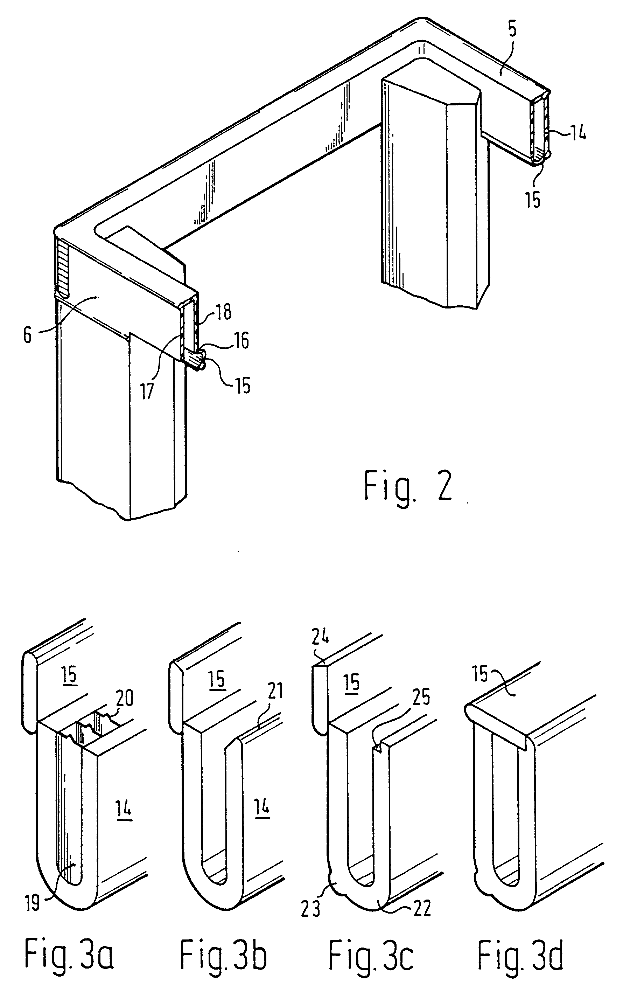

Entsprechend Fig. 2 sind die Griffholme 5 und 6 durch nach unten hin offene U-Profile 14 gebildet, die unten durch eine Leiste 15 geschlossen sind. Die Leiste 15 ist hierbei am Rand eines der beiden Schenkel des U-Profils 14 angespritzt und zwar über ein einstückiges Filmscharnier bei 16, so daß nach Entformung des Kastens die Leiste 15 über das U-Profil verschwenkt und mit den Rändern der beiden Schenkel 17 und 18 des Profils verschweißt wird und zwar durch Ultraschallschweißen oder Hochfrequenzschweißen. Dadurch ergibt sich an der Unter- u. Oberseite der Griffholme 5 und 6 eine komfortable Grifffläche, gebildet durch die Leiste 15. Ferner ergibt sich infolge der Anschweißung der Leiste 15 ein in sich geschlossenes Hohlprofil im Bereich der Griffholme 5 und 6, was einen steifen Kastenaufbau begünstigt.

In den Fig. 3a bis 3d sind verschiedene Ausführungsformen von U-Profilen dargestellt. Fig. 3a zeigt ein durch in Abstand angeordnete Querstege 19 unterteiltes U-Profil 14, wobei die Oberseiten der Stege 19 mit Schweißspitzen 20 ausgebildet sind. Nach Umlegen der angeformten Leiste 15 in Anlage an die freien Ränder der Schenkel des U-Profils 14 erfolgt das Verschweißen, wobei ein fester Verbund zwischen Leiste 15 und U-Profil 14 durch die Schweißspitzen 20 begünstigt wird.

In der Ausführungsform nach Fig. 3b ist an einem U-Schenkel die Leiste 15 angespritzt, wohingegen der andere U-Schenkel an seinem freien Rand mit einem durchgehenden spitzen Schweißvorsprung 21 ausgebildet ist. Auch dies dient zu einem innigen Verbund zwischen Leiste 15 und Profil 14 nach Ultraschallschweißung oder Hochfrequenzschweißung.

Bei der Ausführungsform nach Fig. 3c, bei der im Bereich des U-Stegs 22 eine durchgehende Wulst 23 angeformt ist, greift der Rand 24 der angespritzten Leiste 15 nach dem Umklappen in eine Aussparung 25 am freien Rand des anderen U-Schenkels ein, deren Außenfläche gerundet ist, so daß sich nach dem Verschweißen der in Fig. 3d um die Holmlängsachse geschlossene Griffholm ergibt. Wie insbesondere aus Fig. 3d recht deutlich ersichtlich ist, zeichnet sich dieser Griffholm durch eine glatte Außenfläche über seinen gesamten Umfang aus, so daß der Kasten selbst unter hohen Lasten nicht in die den Griffholm umklammernde Griffhand einschneiden kann.

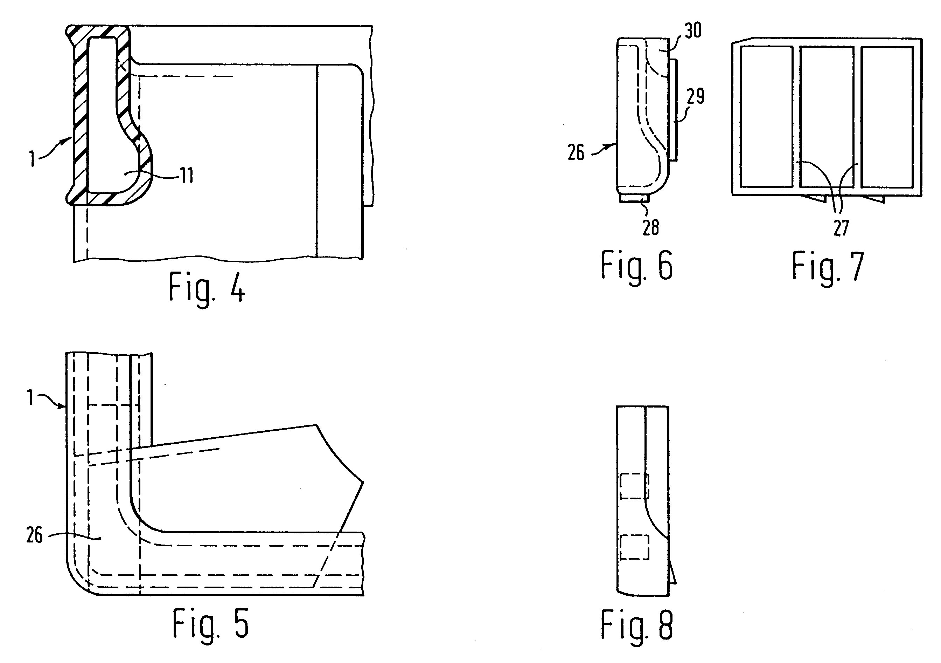

Fig. 4 zeigt einen Schnitt durch einen Griffholm dessen Mündungsöffnung 11 durch einen Stopfen 26 verschließbar ist, der in verschiedenen Ansichten aus den Fig. 6 bis 8 ersichtlich ist. Wie aus Fig. 7 hervorgeht, ist der Stopfen 26 zur Erhöhung seiner Stabilität durch Querstege 27 in mehrere Kammern untergliedert, so daß er in die Mündungsöffnung 11 eingeschlagen werden kann. Zur Erhöhung des Sitzes des Stopfens 26 in der Mündungsöffnung 11 bzw. im Hohlraum des Griffholms 1 sind an der Außenfläche des Stopfens hakenartige Rastvorsprünge 28 und 29 vorgesehen. Die Außenabmessungen des Stopfens entsprechen im wesentlichen den Innenabmessungen des Hohlraums des Griffholms 1, wobei eine Anschlagschulter 30 die Eindringtiefe bzw. Einschlagtiefe des Stopfens 26 in die Mündungsöffnung 11 begrenzen kann.

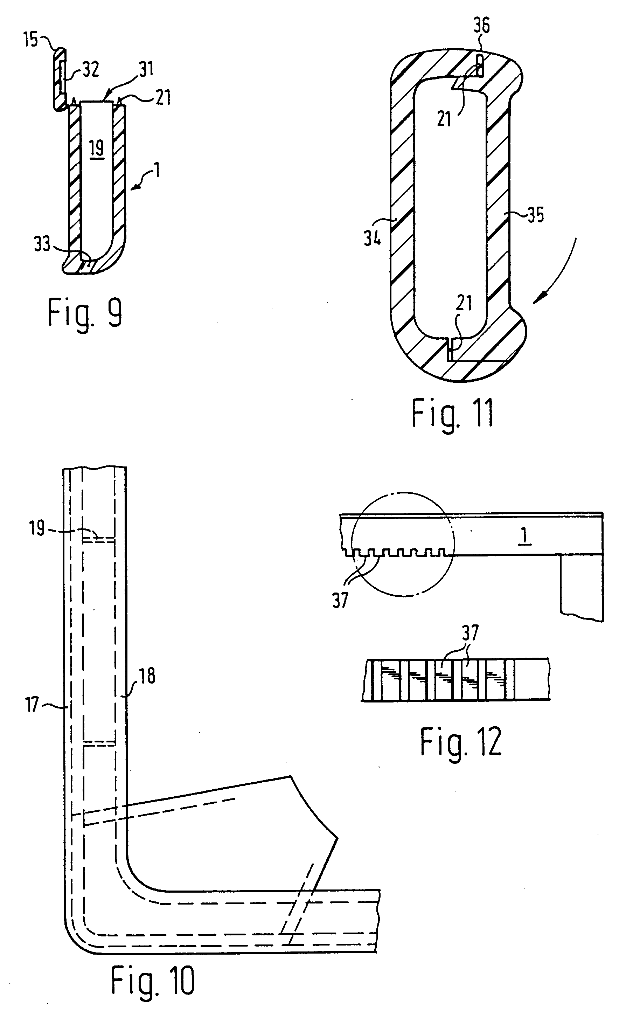

Fig. 9 zeigt eine Ausführungsform eines Griffholms, bei dem die die U-Schenkel verbindenden Querstege 19 in Art von Zentriervorsprüngen für die anzuschweißende Leiste 15 etwas über die oberen Ränder der beiden U-Schenkel bei 31 vorgezogen sind. Entsprechend ist die Leiste 15 an ihrer Innenseite mit Ausnehmungen 32 versehen. An den oberen Rändern der beiden U-Schenkel sind Schweißvorsprünge 21 analog der Ausführungsform nach Fig. 3b ausgebildet. Nach Umklappen bzw. Umschwenken der angespritzten Leiste 15 wird die Leiste auf den Zentriervorsprüngen 31 fixiert, so daß eine sichere und zuverlässige Ultraschallschweißung ermöglicht wird. An der Holmunterseite sind Wasserablauföffnungen 33 ausgebildet.

Aus Fig. 10 ergibt sich die Ausführungsform nach Fig.9 in Draufsicht, wobei die U-Schenkel 17 und 18 wie auch die Querstege 19 strichliert eingezeichnet sind.

Bei der Ausführungsform nach Fig. 11 ist der Griffholm aus zwei oben und unten miteinander verschweißten Profilen 34 und 35 gebildet, die über ein angespritztes Filmscharnier 36 miteinander verbunden sind. An den Schweißflächen sind Schweißvorsprünge ausgebildet.

In der Ausführungsform nach Fig. 12 sind an der Holmunterseite des Griffholms 1 Lamellen 37 mit Abstand zueinander angeordnet, die das Griffverhalten verbessern. Die einzelnen Lamellen 37 sind aus der Ansicht in Fig. 12 unten noch besser ersichtlich.

## Patentansprüche

1. Flaschenkasten aus Kunststoff mit an mindestens zwei gegenüberliegenden Kastenseitenwänden ausgebildeten waagrechten Griffholmen,
dadurch **gekennzeichnet,**
daß die Griffholme (1) durch Teilprofile (14; 34) gebildet sind, die durch eine angeschweißte Profilleiste (15; 35) zu einem um die Holmachse geschlossenen Hohlprofil mit vorzugsweise O-Profilquerschnitt verbunden sind.

2. Flaschenkasten nach Anspruch 1,
dadurch **gekennzeichnet**,
daß die Teilprofile durch U-Profile (14) gebildet sind, deren freie Schenkel (17, 18) durch eine angeschweißte Leiste (15) zum geschlossenen Hohlprofil verbunden sind.

3. Flaschenkasten nach Anspruch 2,
dadurch **gekennzeichnet**,
daß die Teilprofile durch nach unten hin offene U-Profile (14) gebildet sind.

4. Flaschenkasten nach einem der Ansprüche 1 bis 3,
dadurch **gekennzeichnet,**
daß der Verschluß der Mündungsöffnung (11) des Holmhohlraums (12) in die Kastenseitenwand durch einen am Kasten angeformten und in die Öffnung (11) einrastbaren Deckel (13) oder durch einen in die Öffnung einsteckbaren Stopfen (26) erfolgt.

5. Flaschenkasten nach Anspruch 4,
dadurch **gekennzeichnet**,
daß der Stopfen (26) an mindestens einer Außenfläche mit hakenförmigen Rastvorsprüngen (28, 29) versehen ist.

6. Flaschenkasten nach Anspruch 4 oder 5,
dadurch **gekennzeichnet,**
daß der Stopfen (26) durch ein geschlossenes und durch Querstage (27) in Kammern untergliedertes Hohlprofil gebildet ist.

7. Flaschenkasten nach einem der vorhergehenden Ansprüche,
dadurch **gekennzeichnet,**
daß an den Schweißflächen der Leiste (15; 35) Schweißvorsprünge (20, 21) vorgesehen sind.

8. Flaschenkasten nach einem der Ansprüche 2 bis 7,
dadurch **gekennzeichnet,**
daß das U-Profil (14) durch Querstege (19) unterteilt ist, die zusätzliche Schweißflächen für die Leiste (15) bilden.

9. Flaschenkasten nach Anspruch 8,
dadurch **gekennzeichnet,**
daß die Querstege (19) Zentriervorsprünge (31) für die anzuschweißende Leiste (32) bilden.

10. Flaschenkasten nach einem der vorhergehenden Ansprüche,
dadurch **gekennzeichnet**,
daß auf der Griffholmunterseite Drainageöffnungen (33) angeordnet sind.

11. Flaschenkasten nach einem der vorhergehenden Ansprüche,
dadurch **gekennzeichnet,**
daß die Griffholmunterseite in Lamellen (37) untergliedert ist.

12. Flaschenkasten nach einem der vorhergehenden Ansprüche,
dadurch **gekennzeichnet,**
daß die Leiste (15; 35) einstückig am Teilprofil (14; 34) vorzugsweise am freien Schenkel über ein Filmscharnier (16; 36) angespritzt ist.

## Claims

1. A bottle crate made of a plastics material with horizontal gripping elements formed on at least two opposite side walls of the crate, characterised in that the gripping elements (1) are formed by partial profiles (14; 34) which, by means of a shaped moulding (15; 35) welded on to them, are adapted to form a hollow profile with a preferably O-shaped cross-section enclosing the axis of the element.

2. A bottle crate according to claim 1, characterised in that the partial profiles are formed by U-profiles (14) whose free arms (17, 18) are interconnected by a welded-on moulding (15) to form an enclosed hollow profile.

3. A bottle crate according to claim 2, characterised in that the partial profiles are formed by U-profiles (14) with their open ends facing downwards.

4. A bottle crate according to one of the claims 1 to 3, characterised in that the closure of the aperture (11) at the junction of the hollow interior (12) of the element with the side wall of the crate is effected either by means of a cap (13) moulded on to the crate and capable of locating in the aperture (11) or by a stopper (26) that can be inserted into the aperture.

5. A bottle crate according to claim 4, characterised in that the stopper (26) is provided on at least one external surface with hook-shaped locating projections (28, 29).

6. A bottle crate according to claim 4 or 5, characterised in that the stopper (26) consists of an enclosed hollow profile sub-divided into chambers by means of transverse bars (27).

7. A bottle crate according to one of the preceding claims, characterised in that weld projections (20, 21) are provided on the weld surfaces of the moulding (15; 35).

8. A bottle crate according to one of the claims 2 to 7, characterised in that the U-profile (14) is sub-divided by transverse bars (19) which form additional weld surfaces for the moulding (15).

9. A bottle crate according to claim 8, charcterised in that the transverse bars (19) form centring projections (31) for the moulding (32) that is to be welded on.

10. A bottle crate according to one of the preceding claims, characterised in that drainage apertures (33) are located on the lower side of the gripping element.

11. A bottle crate according to one of the preceding claims, characterised in that the lower side of the gripping element is sub-divided into ribs (37).

12. A bottle crate according to one of the preceding claims, characterised in that the moulding (15; 35) is joined in one piece to the partial profile (14; 34) by a film coating sprayed preferably on the free arm.

## Revendications

1. Casier à bouteilles en matière synthétique avec des éléments horizontaux servant de poignées et conçus sur au moins deux parois latérales opposées, caractérisé en ce que les éléments servant de poignées (1) sont constitués par des profilés partiels (14, 34) qui sont reliés par une barre profilée soudée (15, 35) à un profil creux fermé autour de l'axe des éléments et avec, de façon privilégiée, une section transversale privilégiée en O.

2. Casier à bouteilles selon la revendication 1, caractérisé en ce que les profilés partiels sont constitués par des profilés en U (14) dont les montants libres (17, 18) sont reliés au profilé creux fermé par une barre soudée (15).

3. Casier à bouteilles selon la revendication 2, caractérisé en ce que les profilés partiels sont constitues par des profilés en U (14) ouverts vers le bas.

4. Casier à bouteilles selon l'une des revendications 1 à 3, caractérisé en ce que la fermeture de la bouche (11) de l'espace creux (12) de l'élément s'effectue dans la paroi latérale du casier par l'intermédiaire d'un couvercle (13) moulé sur le casier et encliquetable dans l'ouverture (11) ou par l'intermédiaire d'un bouchon (26) enfichable dans l'ouverture.

5. Casier à bouteilles selon la revendication 4, caractérisé en ce que le bouchon (26) est muni, sur au moins une surface extérieure, de saillies d'accrochage (28, 29) en forme de crochets.

6. Casier à bouteilles selon les revendications 4 ou 5, caractérisé en ce que le bouchon (26) est constitué par un profilé creux fermé et subdivisé en chambres par des traverses (27).

7. Casier à bouteilles selon l'une des revendications précédentes, caractérisé en ce que des saillies de soudage (20, 21) sont prévues sur les surfaces de soudage de la barre (15, 35).

8. Casier à bouteilles selon l'une des revendications 2 à 7, caractérisé en ce que le profilé en U (14) est divisé par des traverses (19) qui forment des surfaces de soudage supplémentaires pour la barre (15).

9. Casier à bouteilles selon la revendication 8, caractérisé en ce que les traverses (19) forment des saillies de centrage (31) pour la barre à souder (32).

10. Casier à bouteilles selon l'une des revendications précédentes, caractérisé en ce que des ouvertures de drainage (33) sont disposées sur la face intérieure des éléments servant de poignées.

11. Casier à bouteilles selon l'une des revendications précédentes, caractérisé en ce que la face inférieure des éléments servant de poignées est subdivisée en lamelles (37).

12. Casier à bouteilles selon l'une des revendications précédentes, caractérisé en ce que la barre (15, 35) est coulée d'une seule pièce par injection sur le profil partiel (14, 34), de façon privilégiée sur le montant libre, par l'intermédiaire d'une charnière pelliculaire (16, 36).
